# EUROPÄISCHE PATENTSCHRIFT

(11) **EP 1 117 730 B1**
(45) Veröffentlichungstag und Bekanntmachung des Hinweises auf die Patenterteilung: **11.10.2006**
(21) Anmeldenummer: 99941623.3
(22) Anmeldetag: 14.08.1999
(51) Int. Cl.: C08J 3/14, C08L 5/00

(54) **VERFAHREN ZUR HERSTELLUNG VON KLEINEN SPHÄRISCHEN PARTIKELN, DIE MINDESTENS EIN WASSERUNLÖSLICHES LINEARES POLYSACCHARID ENTHALTEN**
METHOD FOR THE PRODUCTION OF SMALL SPHERICAL PARTICLES CONTAINING AT LEAST ONE WATER-INSOLUBLE LINEAR POLYSACCHARIDE
PROCEDE DE PREPARATION DE PETITES PARTICULES SPHERIQUES CONTENANT AU MOINS UN POLYSACCHARIDE LINEAIRE SOLUBLE DANS L'EAU

(30) Priorität: 28.08.1998 DE 19839212
(43) Veröffentlichungstag der Anmeldung: 25.07.2001
(73) Patentinhaber: Südzucker Aktiengesellschaft Mannheim/Ochsenfurt, 68165 Mannheim (DE)
(72) Erfinder: BENGS, Holger, D-60598 Frankfurt (DE); GRANDE, Jürgen, D-65812 Bad Soden (DE)
(74) Vertreter: Luderschmidt, Schüler & Partner
(86) Internationale Anmeldenummer: PCT/EP1999/005975
(87) Internationale Veröffentlichungsnummer: WO 2000/012589

(56) Entgegenhaltungen:
- EP-A- 0 213 303
- WO-A-88/08011
- US-A- 5 350 524
- A. BERTHOLD ET AL.: "Preparation and characterization of chitosan microspheres." JOURNAL OF CONTROLLED RELEASE, Bd. 39, 1996, Seiten 17-25, XP004037383

## Beschreibung

Die vorliegende Erfindung betrifft ein Verfahren zur Herstellung von kleinen sphärischen Partikeln, die ganz oder teilweise aus mindestens einem wasserunlöslichen linearen Polysaccharid bestehen, sowie mit diesem Verfahren erhältliche Partikel.

Verfahren zur Herstellung von sphärischen Mikropartikeln, die wasserunlösliche lineare Polysaccharide enthalten, sind in der prioritätsälteren nicht-vorveröffentlichten deutschen Patentanmeldung Nr. 19737481.6 der Anmelderin beschrieben. Mit diesem Verfahren können sphärische Mikropartikel erhalten werden, die sich insbesondere durch eine hohe Einheitlichkeit in bezug auf ihre Gestalt und Verteilung des Durchmessers sowie gute mechanische Eigenschaften auszeichnen.
Aufgrund ihrer vergleichsweise regelmäßigen Beschaffenheit bei gleichzeitig guten mechanischen Eigenschaften können diese Partikel für eine Vielzahl von Anwendungen eingesetzt werden.

Es hat sich jedoch gezeigt, daß je nach Anwendungszweck eine gezielte Optimierung bestimmter Partikeleigenschaften wünschenswert sein kann.

Mit dem vorstehend genannten Verfahren können insbesondere Partikel erhalten werden, deren mittlerer Durchmesser im allgemeinen 1 µm und mehr ist. Es bestand daher ein Bedürftnis, ein optimiertes Verfahren zu entwickeln, mit dem gezielt kleine Partikel hergestellt werden können, deren mittlerer Durchmesser wenige Mikrometer nicht übersteigt und insbesondere im Nanometerbereich liegt.

Es war daher Aufgabe der vorliegenden Erfindung, ein Verfahren zur Verfügung zu stellen, mit dem auf einfache Weise reproduzierbar wasserunlösliche lineare Polysaccharide enthaltende, sphärische Partikel erhalten werden können, die neben einer regelmäßigen Gestalt, einheitlichen Verteilung des Durchmessers sowie guten mechanischen Eigenschaften einen besonders kleinen mittleren Durchmesser aufweisen, der wenige Mikrometer nicht übersteigt und vorzugsweise im Nanometerbereich liegt.

Gelöst wird diese Aufgabe durch ein Verfahren zur Herstellung von kleinen sphärischen Partikeln, die ganz oder teilweise aus mindestens einem wasserunlöslichen linearen Polysaccharid bestehen, bei dem keine Verzweigungen nachweisbar sind durch Lösen des mindestens einen wasserunlöslichen linearen Polysaccharids in einem Lösungsmittel oder Lösungsmittelgemisch, Einbringen der gebildeten Lösung in ein Fällmittel oder Fällmittelgemisch, gegebenenfalls Kühlen des dabei entstehenden Gemisches und Abtrennen der gebildeten Partikel, wobei als Fällungshilfsmittel mindestens ein heißwasserlösliches Poly-alpha-D-glucan mit Verzweigungen eingesetzt wird, und wobei das Fällungshilfsmittel vor Durchführung der Fällungsreaktion in dem Fällmittel gelöst wird.

In diesem Sinne versteht sich die vorliegende Erfindung als vorteilhafte erfinderische Weiterbildung der vorstehend genannten deutschen Patentanmeldung Nr. 19737481.6, auf deren Inhalt für die Zwecke der vorliegenden Erfindung vollinhaltlich bezug genommen wird.

Obwohl in dieser Anmeldung auch der Einsatz von Fällungshilfsmitteln diskutiert wird, findet sich kein Hinweis auf die Verwendung von heißwasserlöslichen Poly-alpha-D-glucan , insbesondere findet sich kein Hinweis, derartige Verbindungen einzusetzen, um gezielt die Größe der Partikel zu kontrollieren.

Die Abbildungen 1 bis 8 zeigen rasterelektronenmikroskopische Aufnahmen (REM, Camscan S-4) von sphärischen Partikeln:
Abbildung 1: erfindungsgemäße Partikel gemäß Beispiel 1 in 5000 x Vergrößerung,
Abbildung 2: Partikel nach Abbildung 1 in 20000 x Vergrößerung,
Abbildung 3: erfindungsgemäße Partikel nach Beispiel 2 in 5000 x Vergrößerung,
Abbildung 4: erfindungsgemäße Partikel nach Abbildung 3 in 20000 x Vergrößerung,
Abbildung 5: Partikel nach Vergleichsbeispiel 1 in 5000 x Vergrößerung,
Abbildung 6: Partikel nach Abbildung 5 in 20000 x Vergrößerung,
Abbildung 7: Partikel nach Vergleichsbeispiel 3 in 5000 x Vergrößerung, und
Abbildung 8: Partikel nach Abbildung 7 in 20000 X Vergrößerung.

Lineare wasserunlösliche Polysaccharide im Sinne der vorliegenden Erfindung sind Polysaccharide, die aus Monosacchariden, Disacchariden oder anderen monomeren Bausteinen derart aufgebaut sind, daß die einzelnen Bausteine stets in der gleichen Art miteinander verknüpft sind. Jede so definierte Grundeinheit oder Baustein hat genau zwei Verknüpfungen, jeweils eine zu einem anderen Monomer. Davon ausgenommen sind lediglich die beiden Grundeinheiten, die den Anfang bzw. das Ende des Polysaccharids bilden. Diese haben nur eine Verknüpfung zu einem weiteren Monomer.

Beispiele für bevorzugte wasserunlösliche lineare Polysaccharide sind lineare Poly-D-glucane, wobei die Art der Verknüpfung unwesentlich ist, solange Linearität im Sinne der Erfindung vorliegt. Beispiele sind Poly(1,4-alpha-D-Glucan) und Poly(1,3-beta-D-Glucan), wobei Poly(1,4-alpha-D-Glucan) besonders bevorzugt ist.

Besitzt die Grundeinheit drei oder mehr Verknüpfungen, wird von Verzweigung gesprochen. Dabei ergibt sich aus der Anzahl der Hydroxylgruppen pro 100 Grundeinheiten, die nicht am Aufbau des linearen Polymerrückgrats beteiligt sind und die Verzweigungen ausbilden, der sogenannte Verzweigungsgrad.

Erfindungsgemäß weisen die linearen wasserunlöslichen Polysaccharide einen Verzweigungsgrad von weniger als 8 % auf, d.h. sie haben weniger als 8 Verzweigungen auf 100 Grundeinheiten. Vorzugsweise ist der Verzweigungsgrad kleiner 4 % und insbesondere maximal 1,5 %.

Ist das wasserunlösliche lineare Polysaccharid ein Polyglucan, z.B. Poly-(1,4-alpha-D-Glucan), ist der Verzweigungsgrad in 6-Position kleiner 4 %, vorzugsweise maximal 2 % und insbesondere maximal 0,5 % und der Verzweigungsgrad in den anderen Positionen, z.B. in 2- bzw. 3-Position, ist vorzugsweise jeweils maximal 2 % und insbesondere maximal 1 %.

Besonders bevorzugt sind Polysaccharide, insbesondere Poly-alpha-D-glucane, die keine Verzweigungen aufweisen, bzw. deren Verzweigungsgrad so minimal ist, daß er mit herkömmlichen Methoden nicht mehr nachweisbar ist.

Erfindungsgemäß beziehen die Präfixe "alpha", "beta" oder "D" allein auf die Verknüpfungen, die das Polymerrückgrat ausbilden und nicht auf die Verzweigungen.

Unter dem Begriff "wasserunlösliche Polysaccharide" werden für die vorliegende Erfindung Verbindungen verstanden, die nach der Definition des Deutschen Arneimittelbuches (DAB = Deutsches Arzneimittelbuch, Wissenschaftliche Verlagsgesellschaft mbH, Stuttgart, Govi-Verlag GmbH, Frankfurt, 9. Auflage, 1987) entsprechend den Klassen 4 bis 7 unter die Kategorien "wenig löslich", "schwer lösliche", "sehr schwer lösliche" bzw. "praktisch unlösliche" Verbindungen fallen.

Für die vorliegende Erfindung sind schwer lösliche bis praktisch unlösliche Verbindungen, insbesondere sehr schwer lösliche bis praktisch unlösliche Verbindungen, bevorzugt.

Im Fall der erfindungsgemäß verwendeten Polysaccharide bedeutet dies, daß vorzugsweise mindestens 98 % der eingesetzten Menge, insbesondere mindestens 99,5 %, unter Normalbedingungen (T = 25 °C +/- 20 %, p= 101325 Pascal +/- 20 %) in Wasser unlöslich ist (entsprechend den Klassen 4 bzw. 5).

"Sehr schwer löslich" entsprechend Klasse 6 kann durch folgende Versuchsbeschreibung veranschaulicht werden:

Ein Gramm des zu untersuchenden Polyglucans/saccharids werden in 1I entionisierten Wasser auf 130 °C unter einem Druck von 1 bar erhitzt. Die entstehende Lösung bleibt nur kurzzeitig über wenige Minuten stabil. Beim Erkalten unter Normalbedingungen fällt die Substanz wieder aus. Nach Abkühlung auf Raumtemperatur und Abtrennung mittels Zentrifugieren können unter Berücksichtigung der experimentellen Verluste mindestens 66 % der eingesetzten Menge zurückgewonnen werden.

Die erfindungsgemäß eingesetzten Polysaccharide können beliebigen Ursprungs sein, solange die vorstehend angegebenen Bedingungen in bezug auf die Begriffe "linear" und "wasserunlöslich" erfüllt sind.

Sie können natürlich oder auf biotechnischen Wege gewonnen sein.

Beispielsweise können sie aus natürlichen pflanzlichen oder tierischen Quellen durch Isolierung und/oder Aufreinigung erhalten werden.
Es können auch Quellen zum Einsatz kommen, die gentechnisch derart manipuliert worden sind, daß sie im Vergleich zu der unmanipulierten Quelle einen höheren Anteil an nicht oder vergleichsweise geringfügig verzweigten Polysacchariden enthalten.

Sie können durch enzymatische oder chemische Entzweigung aus nicht-linearen Polysacchariden hergestellt worden sein.

Biotechnische Methoden umfassen biokatalytische, auch biotransformatorische, oder fermentative Prozesse.

Ein vorteilhaftes Verfahren für die biotechnische Gewinnung ist z.B. in der WO 95/31553 beschrieben.

Es können auch modifizierte wasserunlösliche lineare Polysaccharide eingesetzt werden, wobei die Polysaccharide beispielsweise durch Veresterung und/oder Veretherung in einer oder mehreren nicht an der linearen Verknüpfung beteiligten Positionen chemisch modifiziert worden sein können. Im Fall der bevorzugten 1,4 verknüpften Polyglucane kann die Modifizierung in 2-, 3- und/oder 6-Position erfolgen.
Maßnahmen für derartige Modifizierungen sind dem Fachmann hinlänglich bekannt.

So können lineare Polysaccharide wie Pullulane, Pektine, Mannane oder Polyfructane, die an sich wasserlöslich oder quellbar sind, durch Modifizierung wasserunlöslich gemacht werden.

Weiter können sogenannte alpha-amylaseresistente Polysaccharide eingesetzt werden wie sie z.B. in der deutschen Patentanmeldung Nr. 198 30 618.0 beschrieben sind.

Weitere geeignete Beispiele für wasserunlösliche lineare Polysaccharide sowie eine äusführliche Erläuterung in bezug auf deren Herstellverfahren finden sich in den prioritätsälteren nicht-vorveröffentlichten deutschen Anmeldungen derselben Anmelderin mit Nrn. 197 37 481.6, 198 03 415.6, 198 16 070.4, 198 30 618.0 und 198 27 978.7, auf die hier ausdrücklich bezug genommen wird.

Die Molekulargewichte M_{w} (Gewichtsmittel, bestimmt mittels Gelpermeationschromatographie im Vergleich zu einer Eichung mit Pullulanstandard) der erfindungsgemäß verwendeten linearen Polysaccharide können in einem weiten Bereich von 10³ g/mol bis 10⁷ g/mol variieren. Bevorzugt liegt das Molekulargewicht M_{w} in einem Bereich von 10⁴ g/mol bis 10⁵ g/mol und besonders bevorzugt von 2 x 10⁴ g/mol bis 5 x 10⁴ g/mol. Ein weiterer vorteilhafter Bereich ist von 2 x 10³ bis 8 x 10³. Entsprechende Bereiche gelten für das bevorzugt eingesetzte Poly-D-glucanund Poly(-1,4-a-D-glucan).

Die Molekulargewichtsverteilung bzw. Polydispersität M_{w}/Mₙ kann ebenfalls in weiten Bereichen je nach Herstellungsverfahren des Polysaccharids variieren. Bevorzugte Werte sind von 1,01 bis 50, insbesondere von 1,5 bis 15. Dabei nimmt die Polydispersität mit einer bimodalen Verteilung der Molekulargewichte zu.

Für das erfindungsgemäße Verfahren kann eine einzige lineare Polysaccharidsubstanz, insbesondere lineares Poly-D-glucan, vorzugsweise Poly(1,4-a-D-glucan), oder Mischungen aus zwei oder mehreren Vertretern verwendet werden.

Die erfindungsgemäß als Fällungshilfsmittel eingesetzten heißwasserlöslichen Poly-alpha-D-glucane gehören ebenfalls zur Gruppe der Polysaccharide. Im Gegensatz zu den wasserunlöslichen linearen Polysacchariden können sie Verzweigungen enthalten und bilden keine alpha-amylase-resistenten Polysaccharide mit einem Gehalt an resistenter Stärke (RS-Gehalt) von 65 % und mehr.

Wie die als Ausgangssubstanzen verwendeten wasserunlöslichen linearen Polysaccharide können sie beliebigen Ursprungs sein. Sie können aus natürlichen Quellen wie z.B. aus Pflanzen oder Tieren, über technische oder biotechnische Verfahren, z.B. biokatalytisch oder fermentativ, gewonnen sein.

Die erfindungsgemäß eingesetzten Poly-alpha-D-glucane können aus gentechnisch oder biotechnisch veränderten Pflanzen gewonnen werden.

Beispielsweise kann durch die gentechnische oder biotechnische Modifikation die Produktion eines Polyglucans mit höherem linearen Anteil oder eine leichtere Separierung der enthaltenden Polyglucane bewirkt werden.

Sie können an den nicht an Verknüpfungen beteiligten Positionen modifiziert sein, beispielsweise durch Veretherung, Veresterung oder oxidativ oder anderweitige dafür geeignete Verfahren.

Es können auch Abbauprodukte größerer Polymermoleküle eingesetzt werden.

Die Poly-alpha-D-glucane können weiteren Aufbereitungsverfahren unterzogen werden, beispielsweise Aufreinigungsverfahren zur Isolierung von unerwünschten Nebenprodukten oder Erhöhung der linearen Strukturen.

Die Erhöhung der linearen Strukturen kann auch mittels Entzweigungstechniken erfolgen, wie z. B. für die wasserunlöslichen linearen Polysaccharide beschrieben.

Es versteht sich, daß auf die heißwasserlöslichen Poly-alpha-D-glucane ebenfalls alle für die wasserunlöslichen linearen Polysaccharide geeigneten Maßnahmen zur Gewinnung angewendet werden können.

Bevorzugte Vertreter der für das erfindungsgemäße Verfahren eingesetzten heißwasserlöslichen Poly-alpha-D-glucane sind native oder chemisch modifizierte Stärken, aus diesen Stärken gewonnene Poly-alpha-D-glucane, sowie stärkeanaloge Verbindungen.

Eine Gruppe von Stärken, die im Rahmen der Erfindung zum Einsatz gelangen können, umfaßt die aus pflanzlichen Rohstoffen gewonnenen Stärken. Hierzu zählen unter anderem Stärken aus Knollen, wie Kartoffeln, Maniok, Maranta, Batata, aus Samen wie Weizen, Mais, Roggen, Reis, Gerste, Hirse, Hafer, Sorghum, aus Früchten, wie Kastanien, Eicheln, Bohnen, Erbsen, und ähnlichen Hülsenfrüchten, Bananen, sowie aus Pflanzenmark, z.B. der Sagopalme.

Üblicherweise bestehen die aus pflanzlichen Rohstoffen gewinnbaren Stärken im wesentlichen aus Amylose, einem Poly(1,4-alpha-D-glucan), und Amylopektin, einem Poly(1,4-alpha-D-glucan) mit 1,6-Verzweigungen, in wechselnden Mengenverhältnissen.

Beispielsweise enthält Stärke aus Kartoffeln ca. 20 Gew.-% Amylose und ca. 80 Gew.-% Amylopektin, während Stärke aus Mais ca. 50 Gew.-% Amylose und ca. 50 Gew.-% Amylopektin enthält.

Unter stärkeanaloge Verbindungen werden Verbindungen verstanden, die aus Poly-alpha-D-glucanen bestehen, aber nicht-pflanzlichen Ursprungs sind. Ein Beispiel hierfür ist das Glykogen, ein dem Amylopektin entsprechendes Poly-alpha-D-glucan, das tierischen Ursprungs ist, oder Dextran, das aus Bakterien gewonnen wird.

Die heißwasserlöslichen Poly-alpha-D-glucane können als Mischung aus einem linearen und einem verzweigten Anteil eingesetzt werden, wie sie z.B. in Stärke vorliegt. In diesem Fall sollte der Anteil an linearem Poly-alpha-D-glucan mehr als 15 Gew.-%, vorzugsweise 50 bis 99,5 Gew.-%, insbesondere 60 bis 90 Gew.-% und ganz besonders bevorzugt 65 bis 80 Gew.-%, bezogen auf die Gesamtmenge Poly-alpha-D-glucan im Fällmittel, betragen.

Sie können aber auch aus verzweigten Strukturen bestehen, wie sie z.B. im Amylopektin oder im Glykogen vorliegen.
Eine verzweigte Struktur liegt vor, wenn der Verzweigungsgrad größer ist als vorstehend für die linearen Polysaccharide angegeben.

Im Rahmen der vorliegenden Erfindung bedeutet "heißwasserlöslich", daß die Poly-alpha-D-glucane bei Raumtemperarur im wesentlich unlöslich sind, wobei vorzugsweise der gleiche Maßstab wie für den Begriff "wasserunlöslich" in Zusammenhang mit den linearen Polysacchariden gilt.
Unter dem Begriff "Lösung" bzw. "Löslichkeit" werden insbesondere auch Suspensionen bzw. Ausbildung von Suspensionen verstanden wie sie bei der Lösung von Stärke auftreten.

Beispielsweise zeigen die erfindungsgemäß bevorzugten heißwasserlöslichen Stärken bei Raumtemperatur so gut wie keine Löslichkeit in Wasser, während die sogenannten kaltwasserlöslichen Stärken unter diesen Bedingungen leichter löslich sind.

Die heißwasserlöslichen Stärken sind insbesondere dadurch charakterisert, daß sie bei Erhitzen unter Eigendruck, z.B. in einem Autoklaven, auf eine Temperatur im Bereich von etwa 100 bis etwa 160 °C Lösungen bilden, wobei die jeweilige Temperatur von der Art der Stärke abhängt.

Beispielsweise kann Kartoffelstärke bei ca. 100 °C bis zur völligen Auflösung gekocht werden, während Maisstärke eine Temperatur von ca. 125 °C erfordert.

Für das erfindungsgemäße Verfahren werden die heißwasserlöslichen Poly-alpha-D-glucane dem Fällmittel vorzugsweise in maximaler Konzentration zugesetzt, d.h. es wird eine gesättigte Lösung hergestellt.

Weitere geeignete Bereiche sind von mehr als 0,001 Gew.-% bis 10 Gew.-%, bevorzugt von 0,01 bis 2 Gew.-% und insbesondere von 0,05 Gew.-% bis 0,5 Gew.%, bezogen auf die eingesetzte Menge an Fällmittel.

Gemäß einer weiteren Ausführungsform können dem oder den linearen wasserunlöslichen Polysaccharid(en) auch andere Polymere, insbesondere andere biokompatible oder bioabbaubare Polymere, beigemischt werden. Dabei hängt die Menge des oder der anderen Polymeren, die beigemengt werden, ohne daß die sphärische Gestalt und/oder sonstige Eigenschaften der herzustellenden Partikel verändert werden, stets von dem zugesetzten Polymer ab. Sie kann bis zu 10 % oder mehr, bezogen auf die Gesamtmenge von eingesetztem wasserunlöslichen Polysaccharid, d. h. linear oder ggf. verzweigt (wie im folgenden angegeben), betragen, in bestimmten Fällen auch weniger. Die zulässige maximale Menge hängt von dem jeweiligen Einzelfall ab und kann von einem Fachmann leicht durch Routineversuche bestimmt werden.

Das weitere Polymer kann ein wasserunlösliches verzweigtes Polysaccharid sein, vorzugsweise ein Polyglucan, insbesondere ein Poly(1,4-alpha-D-glucan) oder ein Poly(1,3-beta-D-glucan).
Das wasserunlösliche verzweigte Polysaccharid kann auch ein heißwasserlösliches Poly-alpha-D-glucan sein, wie es erfindungsgemäß als Fällungshilfsmittel eingesetzt werden kann.

Dabei ist der Verzweigungsgrad unerheblich. Der Anteil an verzweigtem Polysaccharid sollte jedoch 30 Gew.-%, bevorzugt 20 Gew.-% und insbesondere 10 Gew.-%, bezogen auf die Gesamtmenge an wasserunlöslichem Polysaccharid nicht übersteigen.

Es können auch Gemische aus zwei oder mehr verzweigten Polysacchariden zugegeben werden.

Die verzweigten Polysaccharide können beliebigen Ursprungs sein. In diesem Zusammenhang wird auf die diesbezüglichen Erläuterungen für die linearen Polysaccharide verwiesen. Bevorzugte Quellen sind Stärke und Stärkeanaloga wie Glykogen. Falls erforderlich können in den verzweigten Polysacchariden der Anteil an linearen Strukturen durch geeignete Anreicherungsverfahren erhöht werden.

Für die Wasserunlöslichkeit und im wesentlichen auch für das Molekulargewicht gelten die gleichen Angaben wie für das lineare Polysaccharid, wobei jedoch das Molekulargewicht der verzweigten Polysaccharide höher sein kann als für die wasserunlöslichen linearen Polysaccharide angegeben.

Beispiele für Fällmittel sind Wasser, Dichlormethan, ein Gemisch aus Wasser und Dichlormethan, Gemische aus Wasser und Alkoholen wie Methanol, Ethanol, Isopropanol, wobei Wasser sowie ein Gemisch aus Wasser und Dichlormethan besonders bevorzugt sind.

Zur Herstellung der Partikel werden die Ausgangssubstanzen wie das mindestens eine lineare Polysaccharid und ggf. weitere Polymere etc., in einem Lösungsmittel gelöst. Beispiele für geeignete Lösungsmittel sind Dimethylsulfoxid (DMSO), Formamid, Acetamid, N,N-Dimethylformamid, N,N-Dimethylacetamid, N-Methylmorpholin-N-oxid in Gegenwart von Wasser, weitere N-substituierte Morpholin-N-oxide, wäßrige Lösungen mit hohem oder niedrigem pH-Wert, oder Mischungen der vorstehend genannten Lösungsmittel, wobei DMSO besonders bevorzugt ist. Selbstverständlich können auch andere, dem Fachmann für diesen Zweck geläufige Lösungsmittel verwendet werden.

Die Gesamtkonzentration an linearem Polysaccharid in dem Lösungsmittel kann je nach Bedarf in weiten Grenzen variieren. Vorzugsweise liegt sie in einem Bereich von 0,02 g (lineares Polysaccharid)/ml (Lösungsmittel) bis 1,0 g/ml, insbesondere von 0,05 g/ml bis 0,8 g/ml und besonders bevorzugt von 0,3 g/l bis 0,6 g/l.

Das Verhältnis Lösungsmittel zu Fällmittel liegt vorzugsweise in einem Bereich von 1 : 1000 bis 1 : 4 (Teil Lösungsmittel / Teile Fällmittel), vorzugsweise 1 : 100 bis 1 : 10 und insbesondere 1 : 70 bis 1 : 30.

Gemäß einer bevorzugten Ausführungsform werden die die Ausgangssubstanzen enthaltene Lösung und das Fällmittel bei einer Temperatur zwischen 20 °C und 50 °C zusammengebracht.

Erfolgt das Zusammenmischen bei erhöhter Temperatur, kann das entstehende Gemisch anschließend bei Bedarf gekühlt werden.

Dabei ist es unerheblich, in welcher Reihenfolge das Lösungsmittel und das Fällmittel zusammengebracht werden, z.B. ob das Fällmittel zum Lösungsmittel oder umgekehrt gegeben wird.
Wichtig ist jedoch, daß eine schnelle Durchmischung gewährleistet wird.

Die Temperatur während des Fällprozesses wird im allgemeinen bei einem Wert von plus 10 °C bis minus 10 °C, vorzugsweise plus 5 °C und minus 5 °C, gehalten. Bei Bedarf kann sie auch höher oder niedriger gewählt werden.

Der Fällprozeß kann relativ langsam bei tiefer Temperatur über Nacht durchgeführt werden.
Er kann durch Variation der Temperatur und des Fällmittels beeinflußt und gesteuert werden.
Falls gekühlt wird, ist sicherzustellen, daß das Gemisch aus Lösungsmittel und Fällmittel liquide bleibt und nicht erstarrt.

Weiter können die Prozeßführung sowie die Eigenschaften der Partikel, wie Größe etc. durch Zusatz weiterer Fällungshilfsmittel beeinflußt werden.

Geeignete Fällungshilfsmittel, die neben dem heißwasserlöslichen Poly-alpha-D-glucan zum Einsatz kommen können, sind z.B. oberflächenaktive Stoffe wie Natriumdodecylsulfat, N-Methylgluconamid, Polysorbate (z.B. Tween (eingetragene Marke)), Alkylpolyglycolether, Ethylenoxid-Propylenoxid-Blockpolymere (z.B. Pluronic (eingetragene Marke)), Alkylpolyglycolethersulfate, generell Alkylsulfate und Fettsäureglycolester, Zucker wie z.B. Fructose, Saccharose, Glucose und wasserlösliche Cellulosederivate.

Die oberflächenaktiven Stoffe können anionischer, kationischer oder nicht-ionischer Natur sein.

Durch Zusatz von wasserlöslichen Cellulosederivaten können besonders regelmäßige, d.h. glatte, Oberflächen erhalten werden.
Prinzipiell kann jedes wasserlösliche Cellulosederivat verwendet werden, sofern es als Fällungshilfsmittel geeignet ist.
Es kann sich hierbei um chemisch modifizierte Cellulosen jedweder Art handeln. Beispiele sind Celluloseester und Celluloseether und deren Mischformen. Konkrete Vertreter sind z.B. Hydroxypropylmethylcellulosen, Hydroxyethylcellulosen, Carboxymethylcellulosen, Celluloseacetate, Cellulosebutyrate, Cellulosepropionate, Celluloseacetobutyrate, Celluloseacetopropionate, Cellulosenitrate, Ethylcellulosen, Benzylcellulosen, Methylcellulosen etc..

Es können auch Mischungen von verschiedenen wasserlöslichen Cellulosederivaten eingesetzt werden.

Unter dem Begriff "wasserlösliche Cellulosederivate" werden für die vorliegende Erfindung Verbindungen verstanden, die nach der Definition des Deutschen Arzneimittelbuches (DAB = Deutsches Arzneimittelbuch, Wissenschaftliche Verlagsgesellschaft mbH, Stuttgart, Govi-Verlag GmbH, Frankfurt, 9. Auflage, 1987) unter die Kategorie sehr leicht löslich bis schwer löslich fallen.

Üblicherweise werden diese weiteren Hilfsmittel ebenfalls dem Fällmittel zugesetzt. Die verwendete Menge hängt von dem jeweiligen Einzelfall sowie den erwünschten Partikeleigenschaften ab, wobei die Bestimmung der jeweils vorteilhaften Menge dem Fachmann geläufig ist.

Als vorteilhaft haben sich Konzentrationen von 2 g (Hilfsmittel)/l (Fällmittel) bis 150 g/l, vorzugsweise von 5 g/l bis 80 g/l und insbesondere 8 g/l bis 20 g/l, erwiesen. Dies gilt insbesondere auch für das wasserlösliche Cellulosederivat.

Die nach dem erfindungsgemäßen Verfahren erhältlichen sphärischen Partikel, die ebenfalls Gegenstand dieser Erfindung sind, weisen wie die in der deutschen Patentanmeldung Nr. 19737481.6 beschriebenen Mikropartikel eine regelmäßige sphärische Gestalt, enge Größenverteilung und gute mechanische Eigenschaften auf.
Zudem ermöglicht der Einsatz der heißwasserlöslichen Poly-alpha-D-glucane als Fällungshilfsmittel eine Optimierung des Verfahrens hin zu kleinen Partikel vorzugsweise in den Nanometerbereich.

So weisen die erfindungsgemäß herstellbaren Partikel im allgemeinen mittlere Durchmesser (dn, Zahlenmittelwert) von 100 nm bis 2 µm, bevorzugt 250 nm bis 1,3 µm und besonders bevorzugt 500 nm bis 1,0 µm.

Sphärisch im Sinne der Erfindung bedeutet, daß die Partikel annähernd Kugelform besitzen. Bei Beschreibung einer Kugel durch von einem gemeinsamen Ursprung ausgehende, in den Raum gerichtete Achsen gleicher Länge, die den Radius der Kugel in allen Raumrichtungen definieren, ist für die sphärischen Partikel eine Abweichung der der Achsenlängen vom Idealzustand der Kugel von 1 % bis 40 % möglich. Bevorzugt werden sphärische Partikel mit Abweichungen bis 25 %, besonders bevorzugt bis 15 % erhalten

Die Oberfläche der sphärischen Partikel kann makroskopisch mit einer Himbeere verglichen werden, wobei die Tiefe von Unregelmäßigkeiten auf der Partikelobertläche, wie Eindellungen oder Einschnitte, maximal 20 % des mittleren Durchmessers der sphärischen Mikropartikel beträgt.

Weiter zeigen die Partikel vorzugsweise eine Dispersität D = Gewichtsmittelwert des Durchmessers (d_{w}) / Zahlenmittelwert des Durchmessers (dₙ) von 1,0 bis 10,0, vorzugsweise von 1,5 bis 5,0 und insbesondere von 2,0 bis 3,0.

Die hier benutzten Mittelwerte sind wie folgt definiert:
dₙ = Summe nᵢ x dᵢ / Summe nᵢ = Zahlenmittelwert
d_{w} = Summe nᵢ x dᵢ² / Summe nᵢ x dᵢ = Gewichtsmittelwert
nᵢ = Anzahl der Partikel mit Durchmesser dᵢ,
dᵢ = ein bestimmter Durchmesser,
i = fortlaufender Parameter.

In diesem Zusammenhang bedeutet der Begriff Gewicht ein gewichtetes Mittel, wobei die größeren Durchmesser einen höheren Stellenwert erhalten.

Es versteht sich, daß die mit dem erfindungsgemäßen Verfahren erhältlichen Partikel für alle Anwendungen wie sie in den prioritätsälteren nicht-vorveröffentlichten deutschen Patentanmeldungen Nrn. 19737481.6, 19803415.6, 19816070.4 oder 19816085.2 aufgeführt sind, geeignet sind.

So können sie in reiner Form oder als Wirkstoffträger auch im weitestem Sinne eingesetzt werden, beispielsweise
- als Additive in der Kosmetik für Salben, Puder, Cremes, Pasten etc.
- als Träger für Wirksubstanzen in pharmazeutischen, tiermedizinischen und anderen ähnlichen Anwendungen,
- als Glättungsmittel z.B. zum Verschließen von Poren oder Glätten von Graten,
- als Lebensmittelzusatzstoff, z.B. als Füllkomponente oder zum Verbessern von rheologischen Eigenschaften,
- als Additiv zur Veredlung von z.B. Emulsionspolymerisaten,
- als Trennhilfen, z.B. für die Abtrennung von Verunreinigungen,
- als Verkapselungsmaterial,
- als Träger für magnetische Partikel etc.,
- als Füllmittel für insbesondere bioabbaubare Polymere oder technische Polymere, z.B. zur Eigenschaftskontrolle,
- als Additiv zur Eigenschaftskontrolle, z.B. der Porosität, des Gewichts, der Farbe etc.,
- als Partikelstandard zur Eichung oder Bestimmung der Partikelgröße unbekannter Materialien etc.,
- als Trägermaterial zur kontrollierten, z.B. retardierten Wirkstoffabgabe,
- als Füllstoff zur Eigenschaftsverbesserung von technischen oder biokompatiblen Polymeren,
- in diagnostischen Tests, z. B. als Ultraschallmittel

Aufgrund ihrer Naturidentität sind die meisten der erfindungsgemäß eingesetzten wasserunlöslichen linearen Polysaccharide und deren Abbauprodukte, insbesondere die Polyglucane wie Poly(1,4-alpha-D-glucan), biokompatibel und biologisch abbaubar. Sie besitzen eine hohe Gewebeverträglichkeit und reichern sich nicht in einem tierischen, insbesondere menschlichen, Organismus an.
Unter biologischem Abbau wird dabei jedweder in vivo ablaufende Vorgang verstanden, der zu einem Abbau oder einer Zerstörung der Substanzen, hier der Polysaccharide, führt.

Diese Eigenschaften der Biokompatibilität und der biologischen Abbaubarkeit sind insbesondere für Verwendungen vorteilhaft, die einen menschlichen oder tierischen Organismus betreffen, z. B. in der Medizin, Pharmazie oder Kosmetik.

Im folgenden wird die Erfindung anhand von Beispielen näher erläutert. Diese Beispiele dienen der Veranschaulichung und haben keine limitierende Bedeutung.

### Beispiele 1, 2 und Vergleichsbeispiel 1

### a. Herstellung der Fäll-Lösung

Zu jeweils 100 mg der in Tabelle 1 genannten heißwasserlöslichen Stärken wurden 100 ml entionisiertes Wasser gegeben. Die erhaltene Suspension wurde unter Rühren auf ca. 90 °C erhitzt, bis eine 0,1 %ige wäßrige Lösung erhalten wurde.

### b. Herstellung der Partikel

Jeweils 1,0 g Poly(1,4-alpha-D-glucan) wurden in 5 ml Dimethylsulfoxid (DMSO, p.a. von Riedel-de-Haen) bei 60 °C gelöst. In jeweils 100 ml des unter a. hergestellten Fällmittels wurden unter Rühren innerhalb weniger Sekunden die DMSO-Lösungen eingetropft.
Die erhaltenen Mischungen wurden für 16 Stunden bei 5 °C gelagert. Es bildete sich jeweils ein feiner weißer Niederschlag aus Partikeln in einer milchigen Suspension aus. Die Partikel wurden abgetrennt, indem jeder Ansatz homogen suspendiert und anschließend bei 3000 Umdrehungen pro Minute etwa 15 Minuten zentrifugiert wurde (Labofuge GL der Firma Herarus).
Der feste Rückstand jedes Ansatzes wurde insgesamt dreimal mit Aqua bidest. aufgeschlämmt und erneut zentrifugiert.
Der dabei erhaltene Feststoff wurde in ca. 10 ml Aqua bidest. aufgeschlämmt, eingefroren und lyophilisiert (Gefriertrocknung Christ Delta 1-24 KD).

Die Ergebnisse sind in der folgenden Tabelle 1 aufgeführt.

**Tabelle 1**

| | Stärketyp | Anteil | Ausbeute |
|---|---|---|---|
| | | Amylose (%) | (%) |
| Beispiel 1 | Mais Hylon VII* | 70 | 73 |
| Beispiel 2 | Maize Starch* | 20 | 80 |
| Vergleichsbeispiel 1 | Amioca Powder* | < 1 | 64 |

| | | | |
|---|---|---|---|
| * jeweils von National Starch Chemistry | | | |

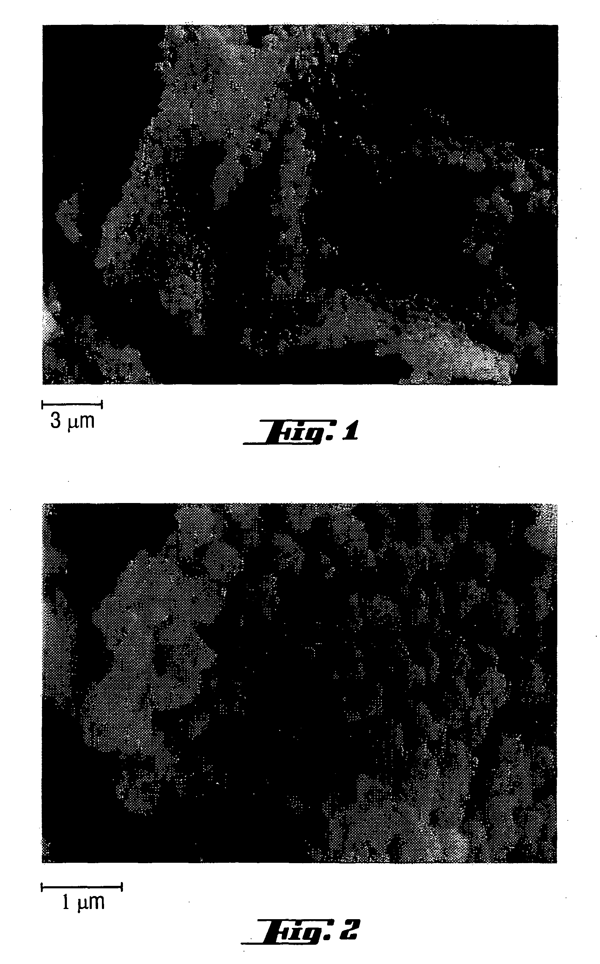

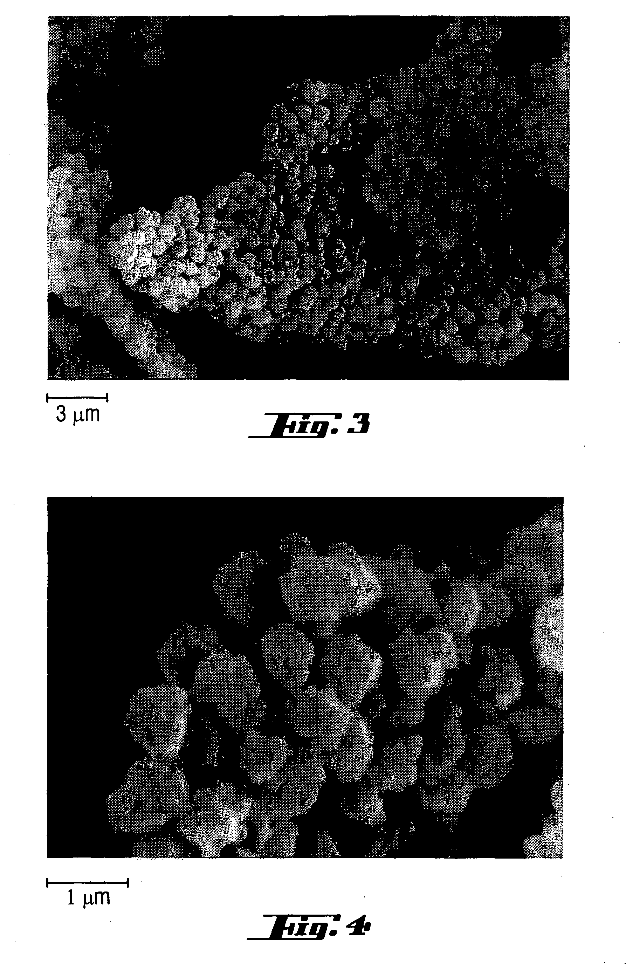

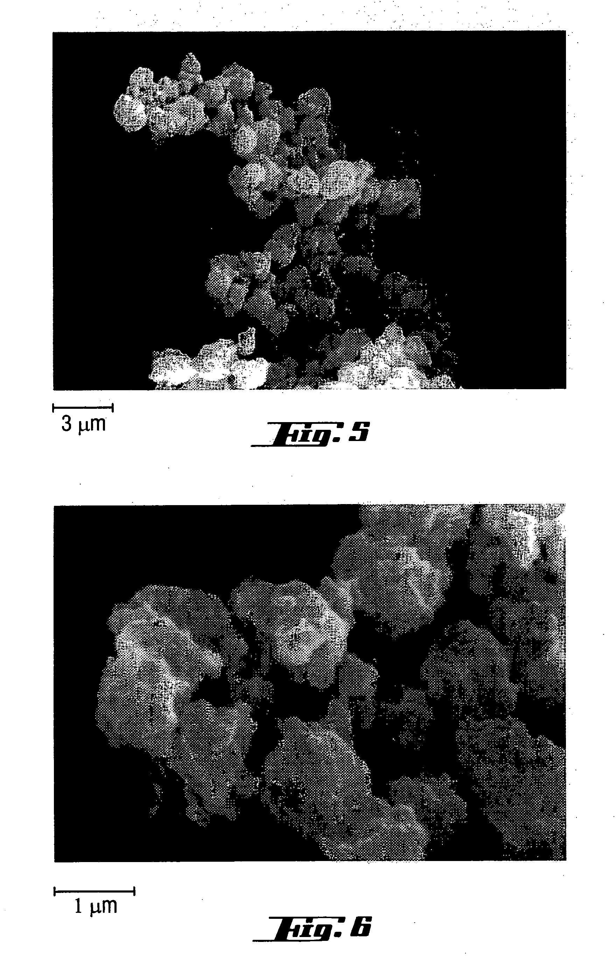

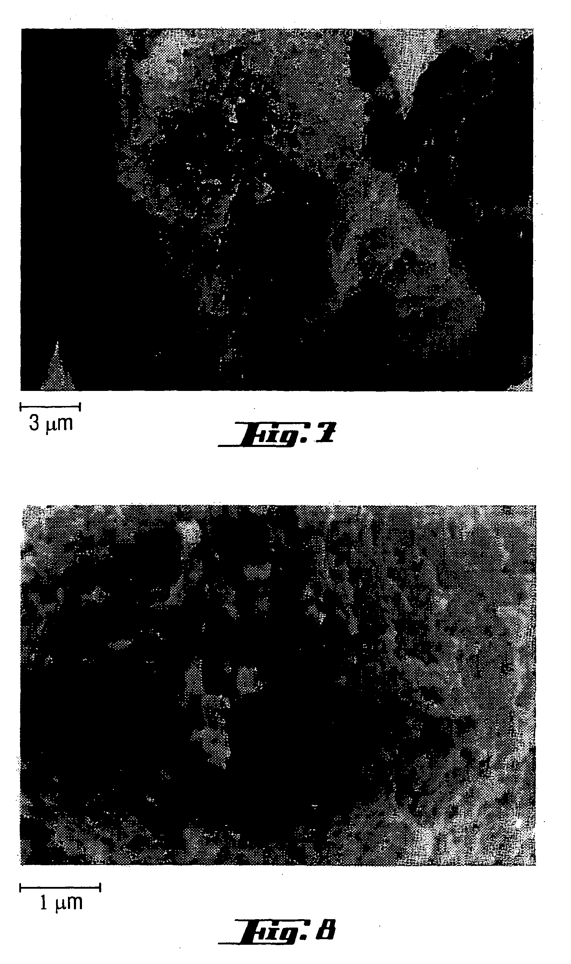

Die Charakterisierung der in Beispielen 1 und 2 sowie Vergleichsbeispiel 1 erhaltenen sphärischen Partikel erfolgte mittels Rasterelektronenmikroskopaufnahmen (REM; Camscan S-4), siehe Abbildungen 1 bis 6.

Die Ergebnisse sind in Tabelle 2 aufgeführt.

**Tabelle 2**

| | Beipiel 1 | Beispiel 2 | Vergleichsbeispiel 1 |
|---|---|---|---|
| Größe | 0,5 µm | 0,5 - 1,0 µm | 1,0 - 2,0 µm |
| Form | kugelförmig, | kugelförmig, | unregelmäßig |
| | sphärisch | sphärisch | |
| Oberflächen- | glatt, | glatt, | rauh, |
| Beschaffenheit (max. Tiefe) | d.h. < 20 % dn | d.h. < 20 % dn | d. h. > 20 % dn |
| Partikel | singulär | singulär | z.T. verschmolzen |

### Vergleichsbeispiele 2 und 3

Herstellung von Partikeln ohne Stärkezusatz zum Fällmittel und mit Zusatz von kaltwasserlöslichen Stärken

Die Herstellung erfolgte im wesentlichen wie in den Beispielen 1 und 2.
Die Stärkekonzentration im Fällmittel betrug jeweils 0,1 %.

Die in Tabelle 3 aufgeführten Ergebnisse zeigen deutlich den Einfluß von Stärke als Fällungshilfsmittel in bezug auf Größe und Gestalt der Partikel.

**Tabelle 3**

| | Vergleichsbeispiel 2 | Beispiel 1 | Vergleichsbeispiel 3 |
|---|---|---|---|
| Stärke | ohne | s. dort | Crisp Film* |
| Größe | 1,0 - 2,0 µm | 0,5 µm | > 2,0 µm |
| Form | kugelförmig, | kugelförmig, | sphärisch |
| | sphärisch | sphärisch | |
| Oberflächen- | glatt, | glatt, | rauh, |
| beschaffenheit (max. Tiefe) | d.h. < 20 % dₙ | d.h. < 20 % dₙ | d.h. > 20 % dₙ |
| Partikel | singulär | singulär | Verschmolzen |

| | | | |
|---|---|---|---|
| * kaltwasserlösliche Stärke von National Starch Chemistry (Amyloseanteil: ca. 50 %). | | | |

## Patentansprüche

1. Verfahren zur Herstellung von kleinen sphärischen Partikeln, die ganz oder teilweise aus mindestens einem wasserunlöslichen linearen Polysaccharid bestehen, bei dem keine Verzweigungen nachweisbar sind, durch Lösen des mindestens einen wasserunlöslichen Polysaccharids in einem Lösungsmittel oder Lösungsmittelgemisch, Einbringen der Lösung in ein Fällmittel oder Fällmittelgemisch, gegebenenfalls Kühlen des dabei entstehenden Gemisches und Abtrennen der gebildeten kleinen Partikel, wobei als Fällungshilfsmittel mindestens ein heißwasserlösliches Poly-alpha-D-glucan mit Verzweigungen eingesetzt wird, und wobei das Fällungshilfsmittel vor Durchführung der Fällungsreaktion in dem Fällmittel gelöst wird, vorzugsweise als gesättigte Lösung.

2. Verfahren nach Anspruch 1, wobei das heißwasserlösliche Poly-alpha-D-glucan aus einer natürlichen Quelle stammt.

3. Verfahren nach Anspruch 2, wobei die natürliche Quelle eine Pflanze oder ein Tier ist.

4. Verfahren nach einem der vorhergehenden Ansprüche, wobei das Poly-alpha-D-glucan eine native Stärke ist.

5. Verfahren nach einem der Ansprüche 1 bis 3, wobei als Poly-alpha-D-glucan Glykogen eingesetzt wird.

6. Verfahren nach einem der vorhergehenden Ansprüche, wobei das Poly-alpha-D-glucan chemisch modifiziert worden ist.

7. Verfahren nach einem der vorhergehenden Ansprüche, wobei als heißwasserlösliches Poly-alpha-D-glucan eine Mischung aus einem linearen und einem verzweigten Polyglucan eingesetzt wird.

8. Verfahren nach Anspruch 7, wobei der Anteil an linearem Poly-alpha-D-glucan in der Mischung mehr als 15 Gew.-% vorzugsweise zwischen 50 und 99,5 Gew.-%, beträgt, bezogen auf das Gesamtgewicht Poly-alpha-D-glucan.

9. Verfahren nach Anspruch 8, wobei der Anteil an linearem Poly-alpha-D-glucan in der Mischung zwischen 50 und 99,5 Gew.%, beträgt, bezogen auf das Gesamtgewicht Poly-alpha-D-glucan.

10. Verfahren nach einem der vorhergehenden Ansprüche, wobei das heißwasserlösliche Poly-alpha-D-glucan in dem Fällmittel als gesättigte Lösung vorliegt.

11. Verfahren nach einem der vorhergehenden Ansprüche, wobei die Lösung und das Fällmittel bei einer Temperatur im Bereich von 20 bis 50 °C vermengt werden und das entstehende Gemisch auf eine Temperatur im Bereich von plus 10 °C bis minus 10 °C abgekühlt wird.

12. Verfahren nach Anspruch 11, wobei das entstehende Gemisch auf eine Temperatur im Bereich von plus 5 °C bis minus 5 °C abgekühlt wird.

13. Verfahren nach einem der vorhergehenden Ansprüche, wobei als Fällmittel Wasser oder ein wäßriges Medium eingesetzt wird.

14. Verfahren nach einem der vorhergehenden Ansprüche, wobei als Lösungsmittel Dimethylsulfoxid eingesetzt wird.

15. Verfahren nach einem der vorhergehenden Ansprüche, wobei das wasserunlösliche lineare Polysaccharid ein lineares Polyglucan ist.

16. Verfahren nach einem der vorhergehenden Ansprüche, wobei als wasserunlösliches lineares Polysaccharid Poly(1,4-alpha-D-glucan) eingesetzt wird.

17. Verfahren nach einem der vorhergehenden Ansprüche, wobei als wasserunlösliches lineares Polysaccharid Poly(1,3-beta-D-glucan) eingesetzt wird.

18. Verfahren nach einem der vorhergehenden Ansprüche, wobei das wasserunlösliche lineare Polysaccharid ein chemisch modifiziertes Polysaccharid ist.

19. Verfahren nach Anspruch 18, wobei das Polysaccharid in mindestens einer der Positionen, die nicht an der Ausbildung der Polymerkette beteiligt ist, verestert und/oder verethert worden ist.

20. Verfahren nach Anspruch 19, wobei das Polysaccharid in Position 2, 3 und/oder 6, verestert und/oder verethert worden ist.

## Claims

1. A method for the production of small spherical particles consisting completely or partially of at least one water-insoluble linear polysaccharide in which no branches are detectable, by dissolving the at least one water-insoluble polysaccharide in a solvent or solvent mixture, introducing the solution into a precipitant or precipitant mixture, optionally cooling the mixture thus resulting and separating the small particles formed, wherein at least one hot water-soluble poly-alpha-D-glucan with branches is used as a precipitating aid and wherein the precipitating aid is dissolved in the precipitant prior to performing the precipitation reaction, preferably as a saturated solution.

2. The method according to claim 1, wherein the hot water-soluble poly-alpha-D-glucan is derived from a natural source.

3. The method according to claim 2, wherein the natural source is a plant or an animal.

4. The method according to any one of the preceding claims, wherein the poly-alpha-D-glucan is a native starch.

5. The method according to any one of claims 1 to 3, wherein glycogen is used as the poly-alpha-D-glucan.

6. The method according to any one of the preceding claims, wherein the poly-alpha-D-glucan has been chemically modified.

7. The method according to any one of the preceding claims, wherein a mixture of a linear and a branched polyglucan is used as the hot water-soluble poly-alpha-D-glucan.

8. The method according to claim 7, wherein the proportion of linear poly-alpha-D-glucan in the mixture is greater than 15% by weight, preferably between 50 and 99.5% by weight, based on the total weight of poly-alpha-D-glucan.

9. The method according to claim 8, wherein the proportion of linear poly-alpha-D-glucan in the mixture is between 50 and 99.5% by weight, based on the total weight of poly-alpha-D-glucan.

10. The method according to any one of the preceding claims, wherein the hot water-soluble poly-alpha-D-glucan is present in the precipitant as a saturated solution.

11. The method according to any one of the preceding claims, wherein the solution and the precipitant are blended at a temperature in the range from 20 to 50°C and the resulting mixture is cooled to a temperature in the range from plus 10°C to minus 10°C.

12. The method according to claim 11, wherein the resulting mixture is cooled to a temperature in the range from plus 5°C to minus 5°C.

13. The method according to any one of the preceding claims, wherein water or an aqueous medium is used as the precipitant.

14. The method according to any one of the preceding claims, wherein dimethyl sulphoxide is used as the solvent.

15. The method according to any one of the preceding claims, wherein the water-insoluble linear polysaccharide is a linear polyglucan.

16. The method according to any one of the preceding claims, wherein poly(1,4-alpha-D-glucan) is used as the water-insoluble linear polysaccharide.

17. The method according to any one of the preceding claims, wherein poly(1,3-beta-D-glucan) is used as the water-insoluble linear polysaccharide.

18. The method according to any one of the preceding claims, wherein the water-insoluble linear polysaccharide is a chemically modified polysaccharide.

19. The method according to claim 18, wherein the polysaccharide has been esterified and/or etherified at at least one of the positions, which are not involved in the formation of the polymer chain.

20. The method according to claim 19, wherein the polysaccharide has been esterified and/or etherified at position 2, 3 and/or 6.

## Revendications

1. Procédé de préparation de petites particules sphériques, qui sont constituées en totalité ou partiellement au moins d'un polysaccharide linéaire insoluble dans l'eau auquel on peut démontrer qu'il n'a pas des ramifications, par la dissolution dans un solvant ou mélange de solvants au moins de celui un polysaccharide insoluble dans l'eau, par l'introduction de la solution sur un agent de précipitation ou un mélange d'agents de précipitation, éventuellement le refroidissement du mélange ainsi formé et la séparation des petites particules formées, quand on met comme agent de facilitation de la précipitation au moins un poly-alpha-D-glucane ramifié, soluble dans l'eau bouillante où l'agent de facilitation de la précipitation se dissout dans l'agent de précipitation avant de la réalisation de la réaction de précipitation, de préférence comme solution saturée.

2. Procédé selon la revendication 1, où le poly-alpha-D-glucane soluble dans l'eau bouillante provient d'une source naturelle.

3. Procédé selon la revendication 2, où la source naturelle est une plante ou un animal.

4. Procédé selon l'une des revendications antérieures, où le poly-alpha-D-glucane est un amidon natif.

5. Procédé selon les revendications 1 à 3, où on utilise glycogène comme poly-alpha-D-glucane.

6. Procédé selon l'une des revendications antérieures, où le poly-alpha-D-glucane a été modifié chimiquement.

7. Procédé selon l'une des revendications antérieures, où on utilise comme poly-alpha-D-glucane soluble dans l'eau bouillante un mélange d'un polyglucane linéaire et l'un ramifié.

8. Procédé selon la revendication 7, où la proportion de poly-alpha-D-glucane linéaire en mélange est plus de 15% en poids, de préférence entre 50 et 99,5% en poids, rapportée au poids total de poly-alpha-D-glucane.

9. Procédé selon la revendication 8, où la proportion de poly-alpha-D-glucane linéaire en mélange est entre 50 et 99,5 % en poids, rapportée au poids total de poly-alpha-D-glucane.

10. Procédé selon l'une des revendications antérieures, où le poly-alpha-D-glucane soluble dans l'eau bouillante existe comme solution saturée dans l'agent de précipitation.

11. Procédé selon l'une des revendications antérieures, où la solution et l'agent de précipitation sont mélangés à une température dans le domaine de 20 à 50 °C et le mélange résulté se refroidit jusqu'à une température dans le domaine de plus 10 °C jusqu'à moins 10 °C.

12. Procédé selon la revendication 11, où le mélange sera refroidi jusqu'à une température dans le domaine de plus 5 °C jusqu'à moins 5 °C.

13. Procédé selon l'une des revendications antérieures, où on ajoute comme agent de précipitation l'eau ou un milieu aqueux.

14. Procédé selon l'une des revendications antérieures, où on met le diméthylsulfoxyde comme solvant.

15. Procédé selon l'une des revendications antérieures, où le polysaccharide linéaire insoluble dans l'eau est un polyglucane linéaire.

16. Procédé selon l'une des revendications antérieures, où on utilise comme polysaccharide linéaire insoluble dans l'eau le poly(1,4-alpha-D-glucane).

17. Procédé selon l'une des revendications antérieures, où on utilise comme polysaccharide linéaire insoluble dans l'eau le poly(1,3-beta-D-glucane).

18. Procédé selon l'une des revendications antérieures, où le polysaccharide linéaire insoluble est un polysaccharide modifié chimiquement.

19. Procédé selon la revendication 18, où le polysaccharide a été estérifié et/ou éthérifié au moins dans l'une d'entre les positions extérieures qui ne sont pas impliquées dans la formation de la chaîne polymérique.

20. Procédé selon la revendication 19, où le polysaccharide a été estérifié et/ou éthérifié dans la position 2, 3 et/ou 6.
